# FASCICULE DE BREVET EUROPEEN

(11) **EP 0 651 963 B1**
(45) Date de publication et mention de la délivrance du brevet: **21.01.1998**
(21) Numéro de dépôt: 94420310.8
(22) Date de dépôt: 09.11.1994
(51) Int. Cl.: A47J 31/22

(54) **Cellule d'extraction de type centrifuge pour une machine de préparation de boisson chaude comportant un joint d'étanchéité déformable**
Extraktionszentrifugentrommel mit verformbaren Dichtring für Brühgetränkegerät
Centrifugal extraction cell comprising deformable gasket for beverage brewer

(30) Priorité: 09.11.1993 FR 9313606
(43) Date de publication de la demande: 10.05.1995
(73) Titulaire: SEB S.A., 69130 Ecully (FR)
(72) Inventeur: Lebrun, Erik, F-65420 Ibos (FR); Astegno, Jean-Paul, F-64420 Espoey (FR); Macera, Alain, F-65380 Lanne (FR); Rouches, Alexandre, F-65000 Tarbes (FR); Dulout, Jean-Michel, F-65120 Sazos (FR)

(56) Documents cités:
- DE-A- 2 428 188
- DE-A- 3 529 053
- FR-A- 1 584 848
- FR-A- 2 685 186
- GB-A- 969 179

## Description

La présente invention se rapporte au domaine technique général de la préparation de boisson chaude, et notamment de café, à partir d'appareils dans lesquels la boisson chaude est obtenue par passage d'un liquide au contact d'une mouture aromatique.

La présente invention concerne une cellule d'extraction de type centrifuge pour une machine de préparation de boisson chaude, de préférence une machine à café, comportant un tambour collecteur de mouture sur lequel est rapporté de manière étanche par l'intermédiaire d'un moyen d'étanchéité, un couvercle pourvu d'un orifice d'alimentation en liquide, ladite cellule comportant également un moyen de filtration.

Dans la description qui suit il sera fait référence de manière préférentielle à une machine à café comportant une cellule d'extraction centrifuge, mais il est bien évident que l'invention peut s'appliquer à tous types de machines susceptibles de préparer une boisson chaude par centrifugation tel que du thé par exemple.

Dans la préparation du café, et en particulier pour la préparation d'un café du genre expresso, il est reconnu que le consommateur souhaite obtenir un café boisson pourvu à sa surface d'une certaine quantité de mousse. Le consommateur apprécie également que la quantité de mousse obtenue lors de la filtration centrifuge, puisse se maintenir à la surface du café pendant un temps suffisamment long. Il est par ailleurs également connu que dans les machines à café de type centrifuge, il s'avère extrêmement difficile d'obtenir à la fois une proportion significative de mousse et en même temps un maintien durable de la mousse à la surface du liquide. Les phénomènes impliqués par la fabrication de mousse sont insuffisamment connus à ce jour, pour être parfaitement maîtrisés. On sait simplement que la fabrication de mousse est liée à la pression résultant de la perte de charge du liquide lorsqu'il passe dans la mouture, ainsi que de la proportion d'air mélangée à la mouture et à l'eau chaude dans le filtre, la proportion de mousse obtenue étant d'autant plus importante que la pression est élevée. En plus de la méconnaissance relative des conditions optimales d'obtention de mousse par centrifugation, il s'avère difficile d'augmenter de manière significative par des moyens classiques la quantité de mousse obtenue à partir d'une machine centrifuge. En effet, un moyen simple utilisé fréquemment jusqu'à présent, consistait précisément à augmenter la pression de fonctionnement des machines centrifuges en vue d'augmenter la quantité de mousse produite. Une telle augmentation de pression est bien évidemment limitée en raison des risques de dégradation ou de rupture de pièces qu'une pression importante fait courir à la cellule d'extraction et au filtre. Il y a également lieu de noter que les possibilités d'augmentation de la pression de fonctionnement sont également en partie liées à la faculté d'augmenter la vitesse de rotation de la cellule d'extraction, une telle augmentation de vitesse étant également limitée sur le plan mécanique et influençant négativement le coût global de l'appareil.

En pratique les machines à café centrifuges présentent donc une série de limitation quant à leurs possibilités de fournir une quantité significative et durable de mousse.

Il a cependant déjà été proposé dans la demande de brevet FR-A-2487661 de réaliser une cafetière centrifuge capable d'assurer la production de mousse à la surface du café. De manière classique, la cellule d'extraction formée d'un tambour collecteur sur lequel est rapporté à l'aide de moyens de verrouillage et de moyens d'étanchéité, un couvercle délimitant avec le tambour un volume collecteur de la mouture et de l'eau chaude. La filtration du mélange eau-mouture-air, est assurée par un moyen de filtration consistant en une série de rainures radiales réparties à la périphérie de la cellule d'extraction et ménagées entre le couvercle et le tambour. La cafetière centrifuge comporte extérieurement à la cellule d'extraction une paroi déflectrice contre laquelle le filtrat issu des rainures radiales est projeté sous un angle aigu. La conjonction de l'angle de projection, de la vitesse de rotation et de la paroi réceptrice est à l'origine de la formation d'une certaine quantité de mousse dans le café.

S'il peut être considéré qu'une telle machine de l'art antérieur est à même de fournir un café pourvu de mousse, il n'en demeure pas moins que sa conception est relativement complexe. En effet, il est nécessaire que la paroi réceptrice et le tambour soient réalisés et disposés relativement les uns par rapport aux autres dans des plages de tolérances dimensionnelles étroites afin d'obtenir une quantité significative de mousse et d'éviter les chutes de pression dans la cellule d'extraction. L'obtention de pièces correspondant à la tolérance prescrite ne peut être réalisée sans une augmentation significative du coût total de la machine.

Il est connu du brevet DE-A-24 48 188 d'utiliser une même pièce pour réaliser au moins partiellement un moyen de filtration et un moyen d'étanchéité dans une cellule d'extraction. La pièce utilisée est un disque-ressort qui constitue la partie inférieure de la cellule d'extraction. Le disque-ressort est en contact de manière annulaire avec la base d'un cône formant la partie supérieure de la cellule d'extraction. Sous l'effet de la force centrifuge provoqué par la rotation de la cellule d'extraction, le contenu de ladite cellule tend à être expulsé vers l'extérieur et déforme par flexion le disque-ressort qui libère alors un espace permettant l'écoulement du liquide.

Cette construction demande une bonne précision dans la géométrie de l'assemblage, notamment en ce qui concerne les surfaces de la base du cône et du disque-ressort venant en contact. Cette construction présente l'inconvénient d'être très sensible aux tolérances de fabrication.

Par ailleurs il est déjà connu, par exemple du brevet FR-A-1584848 de renforcer l'étanchéité d'une cellule d'extraction par le montage d'un joint annulaire d'étanchéité entre le tambour et le couvercle. Le joint annulaire assume les fonctions classiques dévolues à un joint d'étanchéité sans pour autant améliorer de manière véritablement notable la production de mousse, l'étanchéité globale d'un tel système diminuant en outre fortement dans le temps en raison de l'usure du joint.

Il est connu du document DE-A-35 29 053 une machine à café avec une cellule d'extraction de type centrifuge comportant un joint disposé entre le tambour et le couvercle de ladite cellule, dans laquelle le tambour et le couvercle sont montés sur un axe et sont mobiles en translation l'un par rapport à l'autre. Dans une première position, le joint assure l'étanchéité de la cellule. Dans une deuxième position, le joint laisse passer le liquide filtré par une fente de filtration annulaire constituée par deux parois en vis-à-vis appartenant au tambour et au couvercle. Le joint de cet appareil a uniquement un rôle d'étanchéité et n'exerce pas d'action de filtration. Par ailleurs, cet appareil nécessite l'intervention de l'utilisateur pour passer de la position d'infusion à la position de filtration.

Le document GB-A-969 179 décrit une méthode pour contrôler la sortie de la boue contenue dans un centrifugateur rotatif. Un joint monté dans une gorge obture un canal d'évacuation. Lorsque la force centrifuge dépasse un certain seuil, la déformation du joint due à la pression exercée libère le passage de la boue. Un dispositif conçu selon ce principe fonctionne en tout ou rien et n'exerce pas d'action de filtration. En particulier, cette méthode ne donne pas d'indication pour séparer le café de la partie non liquide du mélange.

L'objet de la présente invention vise en conséquence à remédier aux divers inconvénients énumérés ci-dessus et à réaliser une cellule d'extraction de préférence adaptable sur une machine à boisson chaude de type centrifuge, et capable d'assurer la production d'une quantité significative et durable de mousse à l'aide de moyens particulièrement simples et efficaces.

Un autre objet de l'invention est de réaliser une cellule d'extraction capable de fournir une quantité appréciable et durable de mousse quelles que soient les variations des vitesses de rotation de la cellule d'extraction.

Les objets assignés à l'invention sont atteints à l'aide d'une cellule d'extraction de type centrifuge pour une machine de préparation de boisson chaude, comportant un tambour collecteur de mouture sur lequel est rapporté de manière étanche, par un moyen d'étanchéité, un couvercle pourvu d'un orifice d'alimentation en liquide, et un moyen de filtration, le moyen de filtration et le moyen d'étanchéité étant constitués d'au moins un joint déformable, ledit joint présentant des propriétés de déformation, et étant monté de manière à assurer en deçà d'une pression de fonctionnement préétablie régnant dans la cellule, l'étanchéité de cette dernière, et au delà de ladite pression, la filtration du mélange mouture-liquide par déformation du joint, caractérisée en ce que le joint déformable est interposé dans une gorge entre le tambour et le couvercle.

Des modifications de la cellule selon la revendication 1 sont définies dans les revendications dépendantes.

D'autres particularités et avantages de l'invention apparaitront et ressortiront plus en détail à la lecture de la description faite ci-après en référence aux dessins annexés, donnés à titre d'exemples illustratifs et non limitatifs, dans lesquels :
- La figure 1 représente selon une coupe transversale, une vue générale d'une cellule d'extraction conforme à l'invention.
- La figure 2 représente selon une vue en coupe transversale, un détail de réalisation de l'invention selon une première variante de réalisation.
- La figure 3 montre selon une vue en coupe transversale un détail de réalisation d'une seconde variante de réalisation conforme à l'invention.
- Les figures 4, 5 et 6 représentent selon des vues en coupe transversale partielle des exemples de réalisation de cellules d'extraction conformes à l'invention, illustrant différentes positions susceptibles d'être prises par un joint d'étanchéité et de filtration conforme à l'invention.
- La figure 7 montre, selon une vue en coupe transversale partielle d'une cellule d'extraction en rotation, un détail de réalisation d'une version préférentielle de l'invention.

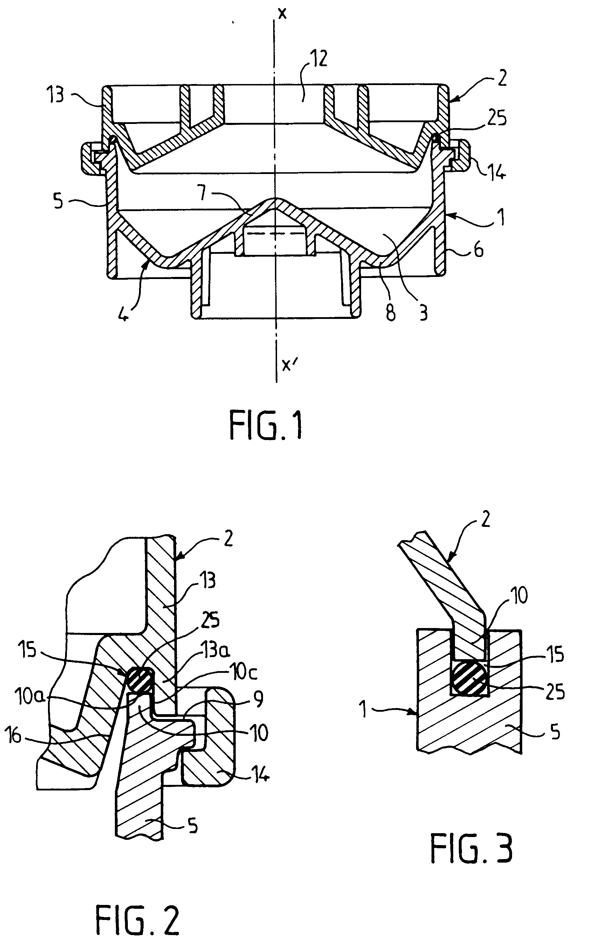

La cellule d'extraction centrifuge montrée à la Figure 1 est formée d'un tambour 1 sur lequel est rapporté un couvercle 2 définissant avec le tambour 1, un volume interne 3 de réception et de collecte de la mouture et de l'eau chaude. Dans l'exemple de réalisation montré à la Figure 1, la cellule d'extraction définit de préférence un corps principal de révolution autour d'un axe principal x-x', par rapport auquel la cellule est montée en rotation par l'intermédiaire d'un système d'entrainement non représenté aux figures. Le tambour 1 comporte un fond 4 et une paroi latérale 5 de préférence circulaire, définissant l'enveloppe extérieure dudit tambour. Avantageusement, la paroi latérale 5 se prolonge à sa partie inférieure par une jupe 6 enveloppant le fond 4. De manière également avantageuse, le fond 4 est constitué d'une zone centrale 7 en forme de cône dont le sommet est situé sur l'axe x-x' et tourné vers le couvercle 2 de manière à constituer un cône rentrant. La zone centrale 7 est reliée à la paroi latérale 5, à partir de la grande base inférieure du cône par une paroi annulaire 8 formant sensiblement un diedre droit avec l'enveloppe dudit cône. Dans l'exemple de réalisation montré aux Figures 1 et 2, la partie supérieure de la paroi latérale comporte un épaulement externe 9 bordant toute ou partie de la périphérie de la paroi latérale 5. L'épaulement externe 9 se prolonge à la partie supérieure de la paroi latérale 5 par une nervure 10 délimitant une face supérieure 10a et deux faces latérales respectivement interne 10b et externe 10c. (Figures 2 et 4 à 6).

Le couvercle 2 se présente sous la forme d'un corps de révolution autour de l'axe x-x', comportant un perçage central 12 par lequel l'eau chaude peut être admise dans la cellule d'extraction. Le couvercle 2 est destiné à être rapporté et verrouillé sur le tambour 1. A cet effet le couvercle 2 est délimité par une enveloppe externe 13 s'étendant sensiblement selon les génératrices de la jupe 6, ladite enveloppe étant pourvue d'une collerette externe 14 définissant intérieurement des rampes inclinées 14a. Le profil des rampes inclinées est destiné à venir coopérer avec l'épaulement externe 9 de manière à former un moyen de verrouillage connu, du type à baïonnette, permettant de verrouiller, par rotation autour de l'axe x-x',le couvercle 2 sur le tambour 1. Il est également possible d'inverser le montage, et de réaliser les rampes inclinées 14a sur le tambour 1.

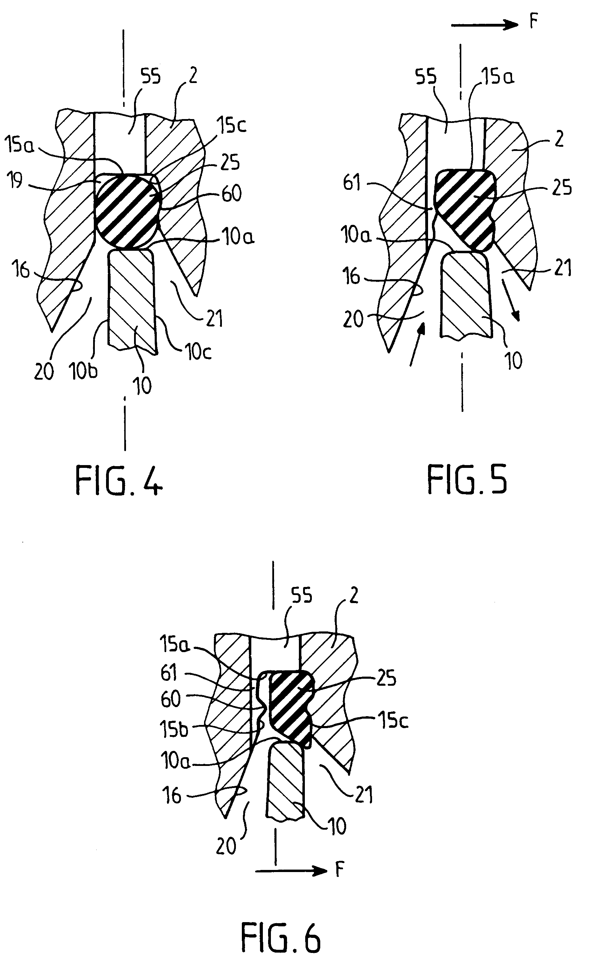

Le couvercle 2 présente une conformation et un profil adapté à celui du tambour 1, et il comporte une gorge 15 s'étendant sensiblement à la périphérie dudit couvercle et ménagée entre le bord terminal 13a de l'enveloppe externe 13 et une paroi annulaire 16 inclinée, par exemple de l'ordre de 5 à 8° par rapport à l'axe x-x', prolongeant selon une direction radiale interne l'enveloppe externe 13 à partir d'une zone située au-dessus du bord 13a. La gorge 15 s'étend de préférence sur toute la périphérie du couvercle 2 et présente une section transversale assimilable à un quadrilatère de préférence carré ou rectangle. Tel que montré aux figures 4 à 6, la gorge 15 définit une paroi supérieure 15a et deux faces latérales opposées, respectivement interne 15b et externe 15c (Figures 4 à 6). La gorge 15 est destinée à permettre l'introduction partielle de la nervure 10, jusque dans une position de butée telle que dans la position de verrouillage du couvercle 2 sur le tambour 1, un espace annulaire 19 de section transversale déterminée "s" est créé entre la face supérieure 10a et les parois de la gorge 15. La section transversale "s" est par exemple carrée ou de préférence rectangulaire. La position de butée est obtenue par l'intermédiaire d'un moyen de contrôle de compression 50,qui sera décrit ultérieurement en détail.

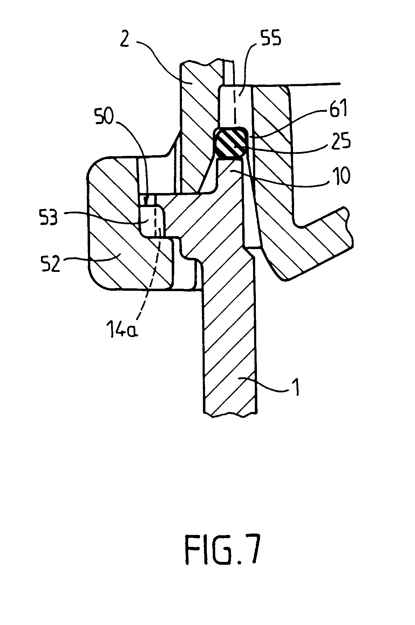

La largeur de la paroi supérieure 15a est supérieure à celle de la face supérieure 10a de manière à pouvoir définir entre la face 10b et la paroi 15b d'une part, et la face 10c et la paroi 15c d'autre part, des zones d'écoulement annulaires, respectivement une zone interne 20 et une zone externe 21. L'espace annulaire 19 est destiné à recevoir un joint déformable 25 réalisé en tous matériaux présentant de bonnes propriétés de déformation, et par exemple à partir d'un matériau siliconé ou de type NBR (Nitrile). En position de verrouillage statique, tel que montré par exemple aux Figures 2 ou 4, le joint 25 est destiné à assurer l'étanchéité entre le volume interne 3 et l'extérieur de la cellule. Le joint 25 est maintenu en place contre le fond de la gorge 15 par un moyen de compression solidaire du tambour 1 et en l'occurrence par la face supérieure 10a de la nervure 10 et sa compression est contrôlée par un élément de butée mécanique 53 du moyen de contrôle 50 interposé entre le tambour 1 et le couvercle 2. L'élément de la butée mécanique est de préférence formé, tel que montré à la figure 7, par une ou plusieurs butées 53 solidaires du couvercle 2 et ménagées dans ou sur des oreilles d'accrochage 52 conformées pour engager les rampes inclinées 14a réalisées à la périphérie du tambour 1 et comprimer le joint 25 dans une plage de compression préétablie. Selon une variante préférentielle, le moyen de contrôle de compression 50 comprend six butées 53 associées à un nombre égal d'oreilles d'accrochage 52 et de rampes inclinées 14a. La pente de chaque rampe inclinée 14a est de l'ordre de 5° et permet, pour chaque rotation relative du tambour 1 et du couvercle 2 correspondant à une avancée de 1 mm de la ou des oreilles d'accrochage 52 sur la ou les rampes inclinées associées, une compression axiale du joint 25 de l'ordre de 0,1 mm environ. La présence de la ou des butées 53, sensiblement au milieu de la ou des oreilles d'accrochage 52 bloque le verrouillage et limite le couple de serrage du joint 25 à une valeur de compression préétablie, variable selon la nature, la forme et le matériau du joint 25, et par exemple à un couple maximum de 4,4 N·m environ pour une cellule d'un diamètre de 8 cm environ. Selon l'invention, le joint déformable 25, d'une section moyenne d'environ 2,6 mm, constitue non seulement le moyen d'étanchéité, mais également le moyen de filtration de la cellule d'extraction. A cette fin le joint déformable 25 interposé entre le tambour 1 et le couvercle 2 présente des propriétés de déformation lui permettant d'assurer pour un niveau de compresion fixé et déterminé à l'aide du moyen de contrôle 50 en deçà d'une pression de fonctionnement préétablie régnant dans la cellule, l'étanchéité de cette dernière, et au-delà de ladite pression la filtration du mélange mouture-liquide-air par déformation dudit joint. A cette fin la dureté du joint déformable 25 est importante et sera comprise entre 50 et 90 shore A et de préférence entre 65 et 75 shore A, la valeur moyenne étant de 70 shore A.

La section transversale du joint déformable 25 pourrait être par exemple circulaire, tel que représenté aux Figures 2 à 5, ou encore par exemple carrée ou rectangulaire.

Grâce à ces caractéristiques de déformation et de contrôle de compression ainsi qu'au montage du joint 25 dans une gorge 15 dont le fond s'étend sensiblement radialement par rapport à l'axe de symétrie ou de révolution x-x' de la cellule d'extraction, le joint 25 peut assumer une double fonction d'étanchéité et de filtration. En effet lors du verrouillage du couvercle 2 sur le tambour 1, la nervure 10 vient comprimer légèrement le joint 25 disposé dans la gorge 15 et occupant au moins une partie de l'espace annulaire 19. Les jeux de fabrication et les tolérances de compression peuvent être utilement rattrapés par le système de verrouillage à baïonnette et le moyen de contrôle 50, de même que l'usure du joint. Dans cette position d'étanchéité, et jusqu'à une pression interne préétablie de fonctionnement correspondant à une certaine vitesse de rotation de la cellule d'extraction, le joint 25 assume toujours une fonction d'étanchéité empêchant le mélange eau-mouture-air de passer de l'intérieur de la cellule d'extraction vers l'extérieur. Ainsi, tel que cela est représenté par exemple à la Figure 4 le mélange est maintenu dans la zone interne 20 sans pouvoir atteindre la zone externe 21. Après un certain temps de latence correspondant à l'atteinte par la cellule de sa vitesse moyenne de rotation, la combinaison de la force centrifuge F et de la pression exercée par le mélange, permet au joint 25 de venir progressivement occuper la position de filtration limite montrée à la Figure 5. Dans cette position le joint 25 est appliqué et comprimé contre la paroi externe 15c, laissant le liquide passer de la zone interne 20 jusque dans l'espace annulaire 19. Après atteinte de la pression critique de fonctionnement nécessaire à la déformation du joint 25, ce dernier subit une déformation complémentaire permettant un fluage partiel dans la zone externe 21 tel que montré à la figure 6, une telle déformation permettant une filtration du mélange entre la face supérieure 10a et le joint 25. Dans un tel cas, le filtrat est évacué et s'écoule par la zone externe 21 en dehors de la cellule.

Dès que la rotation de la cellule peut être interrompue et que sa vitesse diminue pour permettre le passage de la pression de fonctionnement sous la pression critique de fonctionnement préétablie, le joint 25 reprend sa position d'étanchéité montrée aux Figures 2, 4 et 5.

Pour obtenir de bons effets de filtration et l'obtention d'un filtrat de bonne qualité correspondant à un café expresso avec présence de mousse durable, il est avantageux, quelque soit la section transversale du joint 25, que ce dernier occupe jusqu'à 120 % (lorsque le joint n'est pas comprimé) de la section "s" correspondant à la section de l'espace annulaire. De manière particulièrement avantageuse le joint occupera entre 110 et 120 % de ladite section "s", et comprendra donc entre 10 et 20 % de son volume hors de la section "s" (en état non comprimé).

D'autres variantes de réalisation sont bien évidemment envisageables sans pour autant sortir du cadre de l'invention. Ainsi tel que cela est montré à la Figure 3, il est possible de réaliser la gorge 15 dans le tambour 1 et par exemple dans sa paroi 5, la nervure 10 étant alors solidaire du couvercle 2.

L'invention permet ainsi à l'aide de moyens particulièrement simples et bon marché, puisqu'une double fonction est assumée par un pièce unique, d'obtenir un café expresso pourvu d'une mousse abondante et durable. Il est également important de noter que quelque soit les variations de la vitesse de rotation de la cellule d'extraction, la filtration s'effectue indépendamment de cette dernière, puisque la filtration est directement liée aux propriétés de déformation du joint dont la maîtrise est assurée. A titre d'exemple uniquement, une pression pratique de fonctionnement peut être obtenue pour une rotation de la cellule d'extraction dont le diamètre est d'environ 8 cm, de l'ordre de 4500 à 12500 tours/minute, la moyenne étant de l'ordre de 7000 tours/minute.

Il est bien évident également, que la cellule d'extraction peut comporter plusieurs joints déformables 25 formant des secteurs définis à la périphérie de la cellule. Selon une variante de réalisation montrée à la figure 7 le couvercle 2 peut être pourvu d'une série de perforations 55 ménagées dans la gorge 15 à partir de la paroi supérieure 15a et mettant en relation l'espace annulaire 19 avec l'extérieur de la cellule. Avantageusement les perforations 55 sont de section circulaires et réparties régulièrement à la périphérie de la cellule, et au nombre par exemple de six. Elles permettent une bonne mise en place du joint 25 au fond de la gorge 15 en assurant un échappement de l'air emprisonné entre le joint 25 et la paroi supérieure 15a. Le serrage du joint 25 est ainsi parfaitement maîtrisé de même que la filtration, et évite l'apparition d'un phénomène de flottement du joint 25. Le maintien en place du joint 25 peut également être amélioré par la présence de deux godrons annulaires 60 (figure 4) réalisés de part et d'autre du joint 25 à partir des parois 15b, 15c pour comprimer latéralement ledit joint 25 sous une précontrainte initiale et favoriser sa tenue. Les perforations 55 assurent également (figures 5 à 7) en cours de rotation et pendant la filtration, la régulation de la pression interne en permettant un échappement de fluide contribuant à maintenir une pression de fonctionnement et de déformation du joint 25 constante.

Par rapport au plan de symétrie vertical de la paroi supérieure 15a, les perforations 55 sont réalisées pour que leur axe de symétrie ne coincide pas avec ledit plan, et soit au contraire légèrement décalé radialement vers l'intérieur de la cellule. Cette réalisation permet de ménager un canal de surpression 61 prolongeant du côté interne chaque perforation 55 pour déboucher dans la gorge 25 et en particulier dans le canal interne 20 et communiquer ainsi avec ce dernier.

Dans le cas ou la cellule d'extraction comprend par exemple six perforations 55, chacune d'entre elles est associée à un canal de surpression 61. La fonction essentielle du ou des canaux de surpression 61 est de maintenir la pression interne de fonctionnement dans la plage de pression préétablie, en autorisant et amorçant un échappement de fluide à une pression légèrement inférieure à celle normalement autorisée par la seule présence des perforations 55 en cas de surcharge momentanée du joint 25 (figure 6). En effet, de fortes hausses de pression peuvent survenir de manière fugitive en cours de rotation de la cellule et le joint 25 est alors plaqué contre la paroi 15c par la force centrifuge et par le liquide, et tout en s'extrudant partiellement dans le canal externe 21, découvre suffisamment les canaux de surpression 61 pour permettre à la pression de redescendre de manière quasi-instantanée. Les canaux de surpression 61 contribuent donc à augmenter la sécurité et la fiabilité de fonctionnement.

Selon une autre variante de réalisation, non représentée aux figures, les canaux de surpression 61 peuvent être indépendants des perforations 55.

## Revendications

1. Cellule d'extraction de type centrifuge pour une machine de préparation de boisson chaude, comportant un tambour (1) collecteur de mouture sur lequel est rapporté de manière étanche, par un moyen d'étanchéité, un couvercle (2) pourvu d'un orifice d'alimentation (12) en liquide, et un moyen de filtration, le moyen de filtration et le moyen d'étanchéité étant constitués d'au moins un joint déformable (25), ledit joint (25) présentant des propriétés de déformation, et étant monté de manière à assurer en deçà d'une pression de fonctionnement préétablie régnant dans la cellule, l'étanchéité de cette dernière, et au delà de ladite pression, la filtration du mélange mouture-liquide par déformation du joint, caractérisée en ce que le joint déformable (25) est interposé dans une gorge (15) entre le tambour (1) et le couvercle (2).

2. Cellule d'extraction selon la revendication 1, caractérisée en ce que le joint (25) est monté dans une plage de compression préétablie, par l'intermédiaire d'un moyen de contrôle de compression (50).

3. Cellule d'extraction selon l'une des revendications 1 ou 2, caractérisée en ce que le moyen de contrôle de compression (50) est interposé entre le tambour (1) et le couvercle (2) et formé par un élément de butée mécanique (53).

4. Cellule d'extraction selon la revendication 3 caractérisée en ce qu'elle comporte au moins un canal de surpression (61) ménagé intérieurement entre le joint (25) et la gorge (15).

5. Cellule d'extraction selon l'une des revendications 1 à 4 caractérisée en ce que la gorge (15) est pourvue de perforations (55) s'étendant entre la paroi supérieure (15a) et l'extérieur de la cellule.

6. Cellule d'extraction selon les revendications 4 et 5 caractérisée en ce que chaque canal de surpression (61) prolonge intérieurement la perforation (55) qui lui est associée du côté interne et débouche dans la gorge (15).

7. Cellule d'extraction selon l'une des revendications 1 à 6 caractérisée en ce que la gorge (15) dans laquelle le joint (25) est disposé est ménagée dans le couvercle (2) ou le tambour (1) et présente une paroi supérieure (15a) s'étendant sensiblement radialement par rapport à l'axe de symétrie x-x' de la cellule.

8. Cellule d'extraction selon la revendication 7 caractérisée en ce que la gorge (15) est ménagée dans la tranche périphérique du couvercle (2) et en ce que le joint (25) est maintenu en place contre la paroi supérieure (15a) par un moyen de compression (10) solidaire du tambour (1).

9. Cellule d'extraction selon la revendication 8 caractérisée en ce que le moyen de compression forme une nervure (10) à la périphérie du tambour (1) délimitant une face supérieure (10a) en appui étanche contre le joint (25) et deux faces latérales (10b, 10c) chacune formant avec chaque paroi de la gorge (15) qui lui est associée une zone d'écoulement (20, 21) pour assurer respectivement l'arrivée du mélange mouture-eau et la sortie de la boisson après filtration entre le joint (25) et la face supérieure (10a).

10. Cellule d'extraction selon l'une des revendications 1 à 9 caractérisée en ce que le joint (25) occupe dans sa position d'étanchéité jusqu'à 120 % de la section "s" correspondante de la gorge (15) et de préférence entre 110 % et 120 %.

11. Cellule d'extraction selon l'une des revendications précédentes caractérisée en ce que le joint (25) est réalisé dans un matériau de préférence en matière siliconée ou en NBR, présentant une résistance shore A comprise entre 50 et 90, et de préférence entre 65 et 75.

12. Cellule d'extraction selon l'une des revendications précédentes caractérisée en ce que le joint (25) et la gorge (15) s'étendent sur toute la circonférence de la cellule pour former un joint annulaire et une gorge périphérique.

13. Cellule d'extraction selon l'une des revendications précédentes caractérisée en ce que le joint (25) est de section sensiblement circulaire, ou en forme de carré ou de rectangle.

14. Machine à boisson chaude pourvue d'une cellule d'extraction conforme à l'une des revendications 1 à 13.

15. Machine selon la revendication 14 caractérisée en ce qu'elle est constituée d'une machine à café centrifuge.

## Claims

1. A centrifugal-type extractor unit for a hot-drink machine, the extractor unit including filtering means, a drum (1) for collecting grounds, and a cover (2) provided with a liquid inlet orifice (12) and mounted in sealed manner on the drum via sealing means, the filtering means and the sealing means being constituted by at least one deformable gasket (25), said gasket (25) having deformation properties and being mounted so that, below a pre-established operating pressure in the unit, it seals said unit, and so that, above said pressure, it deforms and thereby filters the grounds-and-liquid mixture, said extractor unit being characterized in that the deformable gasket (25) is interposed in a groove (15) between the drum (1) and the cover (2).

2. An extractor unit according to claim 1, characterized in that the gasket (25) is mounted so that it is compressed in a pre-established compression range by compression control means (50).

3. An extractor unit according to claim 1 or 2, characterized in that the compression control means (50) are formed by a mechanical abutment element (53) interposed between the drum (1) and the cover (2).

4. An extractor unit according to claim 3, characterized in that it includes at least one pressure relief channel (61) provided internally between the gasket (25) and the groove (15).

5. An extractor unit according to any one of claims 1 to 4, characterized in that the groove (15) is provided with perforations (55) extending between its top wall (15a) and the outside of the unit.

6. An extractor unit according to claim 4 or 5, characterized in that each pressure relief channel (61) inwardly extends the inside end of the associated perforation (55) and opens out into the groove (15).

7. An extractor unit according to any one of claims 1 to 6, characterized in that the groove (15) in which the gasket (25) is disposed in provided in the cover (2) or in the drum (1), and has a top wall (15a) extending substantially radially relative to the axis of symmetry x-x' of the unit.

8. An extractor unit according to claim 7, characterized in that the groove (15) is provided in the peripheral edge of the cover (2), and in that the gasket (25) is held in place against the top wall (15a) by compression means (10) integral with the drum (1).

9. An extractor unit according to claim 8, characterized in that the compression means form a rib (10) on the periphery of the drum (1), the rib defining a top face (10a) for abutting in sealed manner against the gasket (25), and two side faces (10b, 10c), each of which co-operates with the wall of the groove (15) that is associated with it to form a flow zone (20, 21) respectively to enable the grounds-and-water mixture to flow in and to enable the drink to flow out after it has been filtered between the gasket (25) and the top face (10a).

10. An extractor unit according to any one of claims 1 to 9, characterized in that, in its sealing position, the gasket (25) occupies up to 120% of the corresponding sectional area "s" of the groove (15), and preferably in the range 110% and 120%.

11. An extractor unit according to any preceding claim, characterized in that the gasket (25) is made of a material that preferably contains silicone or is NBR, and that has Shore A hardness lying in the range 50 to 90, and preferably in the range 65 to 75.

12. An extractor unit according to any preceding claim, characterized in that both the gasket (25) and the groove (15) extend over the entire circumference of the unit to form an annular gasket, and a peripheral groove.

13. An extractor unit according to any preceding claim, characterized in that the gasket (25) has a cross-section that is substantially circular, or else that is square or rectangular.

14. A hot-drink machine provided with an extractor unit according to any one of claims 1 to 13.

15. A machine according to claim 14, characterized in that it is constituted by a centrifugal coffee machine.

## Patentansprüche

1. Zentrifugier-Extraktionszelle für eine Maschine zur Bereitung von Heißgetränken, mit einer Mahlgut-Sammeltrommel (1), an der mittels eines Abdichtungsmittels in dichter Weise ein Deckel (2) angebracht ist, der mit einer Flüssigkeitszufuhröffnung (12) versehen ist, und einem Filtrationsmittel, wobei das Filtrationsmittel und das Abdichtungsmittel durch wenigstens eine verformbare Dichtung (25) gebildet sind, wobei die Dichtung (25) Verformungseigenschaften aufweist und so angebracht ist, daß sie diesseits eines vorbestimmten, in der Zelle herrschenden Betriebsdrucks deren Dichtigkeit gewährleistet und jenseits des Drucks die Filtration des Gemischs aus Mahlgut und Flüssigkeit durch Verformung der Dichtung gewährleistet, dadurch gekennzeichnet, daß die verformbare Dichtung (25) in einer Nut (15) zwischen der Trommel (1) und dem Deckel (2) angeordnet ist.

2. Extraktionszelle nach Anspruch 1, dadurch gekennzeichnet, daß die Dichtung (25) mittels eines Kompressionssteuermittels (50) innerhalb eines voreingestellten Kompressionsbereichs angebracht ist.

3. Extraktionszelle nach einem der Ansprüche 1 oder 2, dadurch gekennzeichnet, daß das Kompressionssteuermittel (50) zwischen der Trommel (1) und dem Deckel (2) angeordnet ist und durch ein mechanisches Anschlagelement (53) gebildet ist.

4. Extraktionszelle nach Anspruch 3, dadurch gekennzeichnet, daß sie wenigstens einen Überdruckkanal (61) aufweist, der im Inneren zwischen der Dichtung (25) und der Nut (15) ausgebildet ist.

5. Extraktionszelle nach einem der Ansprüche 1 bis 4, dadurch gekennzeichnet, daß die Nut (15) mit Löchern (55) versehen ist, die sich zwischen der oberen Wand (15a) und dem Äußeren der Zelle erstrecken.

6. Extraktionszelle nach den Ansprüchen 4 und 5, dadurch gekennzeichnet, daß jeder Überdruckkanal (61) im Inneren das ihm zugeordnete Loch (55) auf der inneren Seite verlängert und in der Nut (15) mündet.

7. Extraktionszelle nach einem der Ansprüche 1 bis 6, dadurch gekennzeichnet, daß die Nut (15), in der die Dichtung (25) angebracht ist, in dem Deckel (2) oder der Trommel (1) ausgebildet ist und eine obere Wand (15a) aufweist, die sich bezüglich der Symmetrieachse x-x' der Zelle im wesentlichen radial erstreckt.

8. Extraktionszelle nach Anspruch 7, dadurch gekennzeichnet, daß die Nut (15) in dem Umfangsrand des Deckels (2) ausgebildet ist und daß die Dichtung (25) an ihrem Ort an der oberen Wand (15a) durch ein fest mit der Trommel (1) verbundenes Kompressionsmittel (10) gehalten wird.

9. Extraktionszelle nach Anspruch 8, dadurch gekennzeichnet, daß das Kompressionsmittel am Umfang der Trommel (1) eine Rippe (10) bildet, welche eine obere Fläche (10a) abgrenzt, die an der Dichtung (25) in dichter Weise anliegt, und zwei Seitenflächen (10b, 10c), die jeweils mit der ihnen zugeordneten Wand der Nut (15) eine Fließzone (20, 21) bilden, um das Eintreten des Gemischs aus Mahlgut und Wasser bzw. das Austreten des Getränks nach der Filtration zwischen der Dichtung (25) und oberen Fläche (10a) zu gewährleisten.

10. Extraktionszelle nach einem der Ansprüche 1 bis 9, dadurch gekennzeichnet, daß die Dichtung (25) in ihrer Abdichtungsstellung bis zu 120% des entsprechenden Querschnitts "s" der Nut (15) und vorzugsweise zwischen 110% und 120% einnimmt.

11. Extraktionszelle nach einem der vorhergehenden Ansprüche, dadurch gekennzeichnet, daß die Dichtung (25) vorzugsweise aus einem mit Silikon versehenen Material oder NBR-Material (Nitril) besteht, das eine Härte Shore A zwischen 50 und 90 und vorzugsweise zwischen 65 und 75 aufweist.

12. Extraktionszelle nach einem der vorhergehenden Ansprüche, dadurch gekennzeichnet, daß sich die Dichtung (25) und die Nut (15) entlang dem gesamten Umfang der Zelle erstrecken, um eine ringförmige Dichtung und eine Umfangsnut zu bilden.

13. Extraktionszelle nach einem der vorhergehenden Ansprüche, dadurch gekennzeichnet, daß die Dichtung (25) einen im wesentlichen kreisförmigen Querschnitt oder einen Querschnitt mit quadratischer oder rechteckiger Form hat.

14. Maschine für Heißgetränke, versehen mit einer Extraktionszelle nach einem der Ansprüche 1 bis 13.

15. Maschine nach Anspruch 14, dadurch gekennzeichnet, daß sie durch eine Zentrifugier-Kaffeemaschine gebildet ist.
